# EUROPEAN PATENT SPECIFICATION

(11) **EP 1 244 285 B1**
(45) Date of publication and mention of the grant of the patent: **10.05.2006**
(21) Application number: 02005390.6
(22) Date of filing: 15.03.2002
(51) Int. Cl.: H04N 1/00, H04N 1/32

(54) **Nonvolatile memory life prolonging circuit and image forming apparatus**
Lebensverlängernde Schaltung für nichtflüchtigen Speicher und Bilderzeugungsgerät
Circuit pour prolonger la vie des mémoires non volatiles et appareil de formation d'images

(30) Priority: 15.03.2001 JP 2001074365; 23.07.2001 JP 2001221816
(43) Date of publication of application: 25.09.2002
(73) Proprietor: Ricoh Company, Ltd., Tokyo 143-8555 (JP)
(72) Inventor: Kobayashi, Kazunori Sutera-Higashi-kasai 60, Edogawa-ku, Toyou-to (JP)
(74) Representative: Schwabe - Sandmair - Marx

(56) References cited:
- EP-A- 0 566 264
- EP-A- 0 859 489
- EP-A- 0 905 963
- EP-A- 0 946 046
- EP-A- 1 043 885
- GB-A- 2 244 582
- US-A- 5 835 816

## Description

The present invention generally relates to image forming apparatuses, such as printers, copiers, facsimiles, etc., and more particularly to image forming apparatuses capable of efficiently accessing to a non-volatile memory, which stores maintenance and supervisory information related to the image forming apparatuses, and obtaining a high performance while reducing load on a CPU.

Recently, various high value-added functions have been proposed to be implemented in image forming apparatuses such as digital copiers, etc., and are gradually adopted therein.

For example, usage history data such as a number of used sheets and so on is stored in a non-volatile memory, and a parameter for controlling an image forming process is changed in accordance with the usage history data so as to obtain a stable image for a long period. In addition, history data related to a device problem such as paper jam, self diagnosis error, etc., is also stored in the non-volatile memory, and later maintenance services are performed in accordance with the history data in an appropriate manner. Further, data indicating a unique operational procedure is also stored in the non-volatile memory for a user or an objective job so that an operational condition can be set and customized. Thus, the above-described usage information is included, for example, in a digital copier as a very important information so as to improve usability when a maintenance is performed and the image forming apparatus is supervised. Accordingly, problems such as a data crash should not occure that might deteriorate the usage information.

For such a non-volatile memory, a NVRAM (Non-Volatile Random Access Memory) or an EEPROM (Electrically Erasable and Programmable Read Only Memory) is frequently employed.

The NVRAM is generally more downsized and cheaper than a magnetic memory such as a hard disc memory. It generally offers the advantage that use of a backup power supply is not necessary when compared with a DRAM (Dynamic Random Access Memory) and an SRAM (Static Random Access Memory). The NVRAM includes a memory cell composed of a pair of cells of the SRAM and EEPROM and functions to store data of the SRAM into the EEPROM. The NVRAM recalls data of the EEPROM to the SRAM. In addition, depending upon a usage manner, the NVRAM is not necessitated to concern a life of the EEPROM. However, the characteristics of NVRAMs rarely vary and NVRAMs are sometimes costly when compared with the EEPROM. In contrast, the characteristics of EEPROMs may vary widely and EEPROMs are cheaper. However, a memory like the EEPROM generally has a life time which is usually expressed by the number of rewriting times (e.g. ranging from a few thousand to a few hundredthousand rewriting operations). Thus, if rewriting is performed with every access to the CPU, the expected product life time of an image forming apparatus probably does not meet with the life time of the EEPROM.

As a result, a reliable operation of the image forming apparatus is not assured. In view of such an aspect, an accessing system has been proposed. For example, a working area is formed in a section of a memory such as a SRAM, a DRAM, etc., and contents (data) in the EEPROM are copied to the working area when the electrical power is supplied to the image forming apparatus. Typical reference and update operations are performed with regard to the working area, and the contents of the EEPROM are periodically updated by the contents of the working area. In such a situation, a value obtained by dividing a lifetime (e.g. 5 to 10 years) of the digital copier with an accessible number of times for accessing to an EEPROM can be set as a number of times for updating the EEPROM.

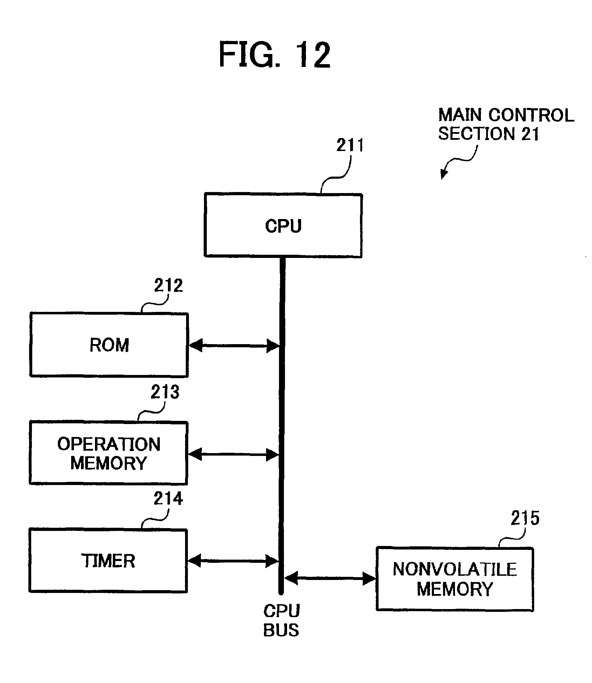

Fig. 12 illustrates an exemplary control section that operates in accordance with the conventional accessing manner. A main control section 21 of a digital copier is controlled by a CPU 211, and includes a ROM 212, a working memory 213, a timer 214, and a non-volatile memory 215, respectively connected to each other via a CPU bus. The CPU 211 of the main control section 21 performs a series of control operations in accordance with control program stored in the ROM 212 after the electrical power is supplied (ON).

The working memory 213 is utilized as a working area, and the non-volatile memory 215 is utilized so as to store a variety of important information to be preserved together with the above-described usage information. The timer 214 is provided so as to generate a timing signal for periodically updating the non-volatile memory 215.

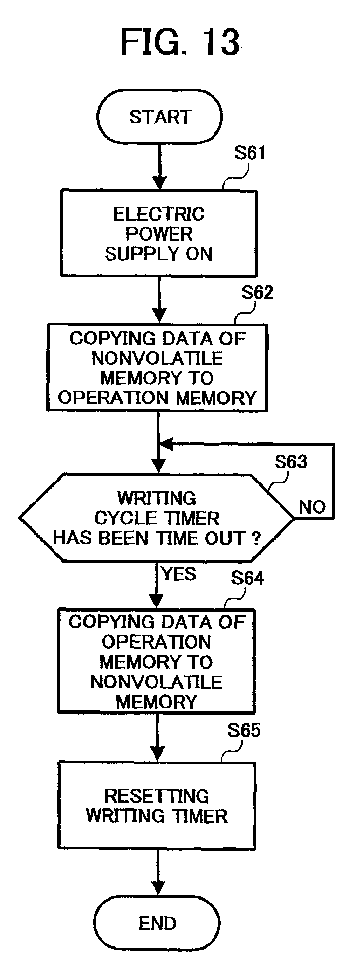

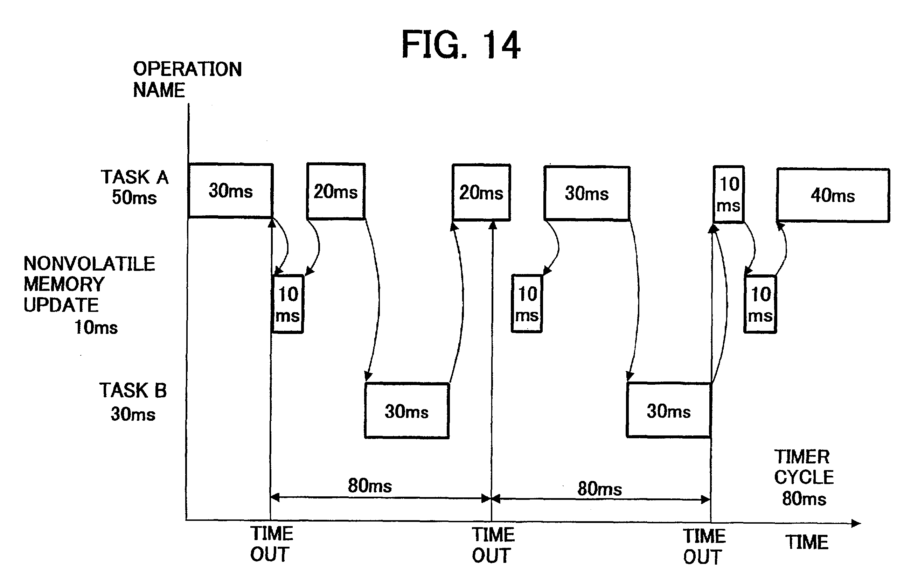

Fig. 13 illustrates a conventional operation control flow for reading and writing data from and to a non-volatile memory in the system of Fig. 12. Referring to Fig. 13, the electrical power is initially supplied, and data of the non-volatile memory 215 is simultaneously copied to the working memory 213 (S62). Then, reference and update operations are performed (not shown in the flow) with regard to the working memory 213 so as to change usage information stored therein in accordance with a change in usage information when an image forming apparatus is operated. However, the non-volatile memory 215 is not accessed. Subsequently, the timer 214 times and determines a preset writing cycle (S63), and data of the working memory 213 is copied to the non-volatile memory 215 every timeout (S64). Then, the timer 214 is reset (S65), and the flow is terminated. Such a writing cycle of the timer 214 is generally optionally set. Thus, if the writing cycle is preferably set in view of a rewritable lifetime of the non-volatile memory 215, the lifetime can meets with a product lifetime of the image forming apparatus. Fig. 14 illustrates a usage condition of such a conventional system that updates information stored in the non-volatile memory at a cycle set by the timer. As shown in Fig. 14, update duration of 10 milliseconds for updating the non-volatile memory 215 periodically occupies the CPU bus in a timeout cycle of 80ms, and accordingly, performing a task A (50ms) three times and a task B (30ms) twice takes in total 240ms.

Like the control system of Fig. 12, when the working memory 213 and the non-volatile memory (EEPROM) 215 are connected to the same CPU bus, the CPU bus is occupied by such an updating operation for the non-volatile memory 215 as illustrated in Fig. 14. Thus, if the amount of information to be transferred to the non-volatile memory 215 is small, there is almost no problem. However, based upon the recent tendency towards the above-described high performance, the amount of the information to be preserved in the non-volatile memory 215 is increasing. As a result, updating the non-volatile memory 215 takes a certain period of time these days, and there is a probability of lowering the performance of the entire system of the image forming apparatus.

EP 0 946 046 A2, on which the preamble of claim 1 is based, discloses an image processing apparatus and a control method therefore for reducing data traffic on the communication medium thereof and a burden of an interface process thereof. The image processing apparatus comprises an image memory for storing image data, e.g. image data scanned from an original, a working memory for storing program codes to be executed by a CPU of the image forming apparatus and a non-volatile memory for storing the program to be executed by the CPU, initial values of the data regarding the execution of the program, data necessary to be also saved even after the turn-off of the power source of the image forming apparatus and the like.

The non-volatile memory is, however, directly connected to a CPU bus line connecting the CPU with the other memory devices of the apparatus. Thus, the CPU directly excesses the non-volatile memory. Thus, it is difficult to substantially match the lifetime of the image forming apparatus with that of the non-volatile memory. Further, it is difficult to update the data content of the non-volatile memory at a reduced data traffic amount on the CPU bus line.

Accordingly, it is an object of the present invention to provide an image forming apparatus and method with increased lifetime and reduced data traffic in a simple manner. The above objects are solved by an image forming apparatus with the features of claim 1 and by an image forming method according to claim 11. Further advantageous embodiments are the subject matter of the dependent claims.

According to the present invention the image forming apparatus includes a volatile memory configured to temporarily store usage information of the image forming apparatus, and a non-volatile memory configured to finally or permanently store the usage information. An integrated circuit comprising an access control device and said volatile memory is provided between the CPU bus line and the non-volatile memory for disabling the CPU to directly access the non-volative memory, wherein the access control device is configured to access and output at least address, data, and a variety of control signals to the non-volatile memory as private usage signals different from outputs of the CPU. The access control device may copy the usage information stored in the non-volatile memory to the volatile memory, and update the non-volatile memory with information newly stored in the volatile memory.

In another embodiment, an updating device may be provided so as to periodically update usage information stored in the non-volatile memory at a prescribed timing.

In yet another embodiment, an access cycle changing device may be provided so as to change a number of cycles for accessing to the non-volatile memory based upon setting.

In yet another embodiment, a switching device may be provided so as to switch an accessing manner for accessing to the non-volatile memory from normal read and write to burst read and write vice versa in accordance with setting.

In yet another embodiment, the access control device is made into an IC, and one of the access cycle changing device and the access manner switching device is built in the IC.

In yet another embodiment, the volatile memory includes any one of an SRAM and a DRAM built in the IC.

In yet another embodiment, the non-volatile memory includes any one of an EEPROM and a ferroelectric substance memory.

A more complete appreciation of the present invention and many of the attendant advantages thereof will be readily obtained as the same becomes better understood by reference to the following detailed description when considered in connection with the accompanying drawings, wherein:
- Fig. 1: is a schematic chart for illustrating a digital copier as one example of an image forming apparatus according to the present invention;
- Fig. 2: is a chart for illustrating hardware of a main control section of the image forming apparatus illustrated in Fig. 1;
- Fig. 3: is a flowchart for illustrating an exemplary data updating process performed with regard to a non-volatile memory of the image forming apparatus illustrated in Fig. 2;
- Fig. 4: is a chart for illustrating one example of a usage condition a CPU bus of the image forming apparatus illustrated in Fig. 2;
- Fig. 5: is a chart for illustrating details of a main control section illustrated in Fig. 2;
- Fig. 6: is a time chart for illustrating a relation between a control signal and various data operations when 3 access cycles are set;
- Fig. 7: is also a time chart for illustrating a relation between a control signal and data when 4 access cycles are set;
- Fig. 8: is a chart for illustrating a modification of the main control section illustrated in Fig. 2;
- Fig. 9: is a time chart for illustrating a relation between a control signal and various data operation when burst reading is selected as an accessing manner;
- Fig. 10: is also a time chart for illustrating a relation between a control signal and various data operation when normal reading is selected as an accessing manner;
- Fig. 11: is a chart for illustrating another modification of the main control section illustrated in Fig. 2;
- Fig. 12: is a chart for illustrating an exemplary configuration of a main control section of a digital copier operated in a conventional manner;
- Fig. 13: is a flowchart for illustrating a conventional control operation performed for the non-volatile memory illustrated in Fig. 12; and
- Fig. 14: is a chart for illustrating a conventional usage condition of a CPU bus.

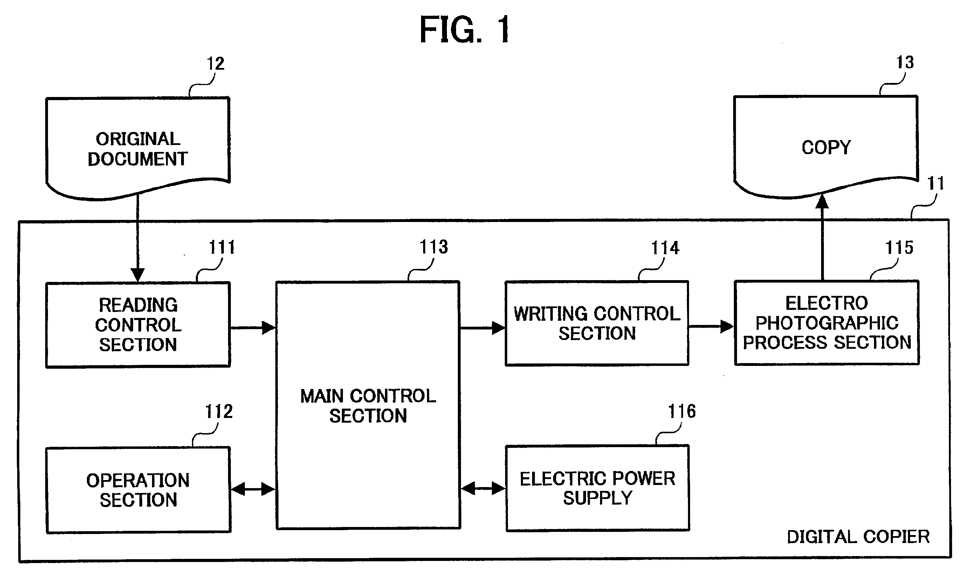

Referring now to the drawings, wherein like reference numerals and marks designate identical or corresponding parts throughout several views, preferred embodiments according to the present invention are described. In particular in Fig. 1 a digital copier is illustrated as one preferred example of an image forming apparatus according to the present invention. The digital copier 11 may include a reading control section 111 for reading an original document 12, an operation section 112 for functioning as a user interface, and a power supply 116.

The digital copier 11 may also include a main control section 113 for controlling all of the reading control section 111, the operation section 112, and the power supply 116, and process read image data. A writing control section 114 for receiving image data from the main control section 113, and an electro-photographic process section 115 for forming, i.e., an image, and a copy in accordance with an output from the writing control section 114 may be provided.

An operation of the image forming apparatus of Fig. 1 is now briefly described with reference to an exemplary image data flow. Initially, image data may be read by the reading control section 111 and may experience additional processing such as A/D conversion, correction, etc. The image data may further experience image processing from an image processing section (not shown) provided in the main control section 113 to be converted into image formation usage data, and is then transmitted to the writing control section 114. The writing control section 114 may control a laser diode (not shown) for optical writing based upon the image data transmitted from the image processing section. The writing control section 114 may form an electrostatic latent image on a photoconductive member provided in the electro-photographic process section 115 using a laser beam emitted from the laser diode. Subsequently, a known electro-photographic process may be performed so as to form a copy 13.

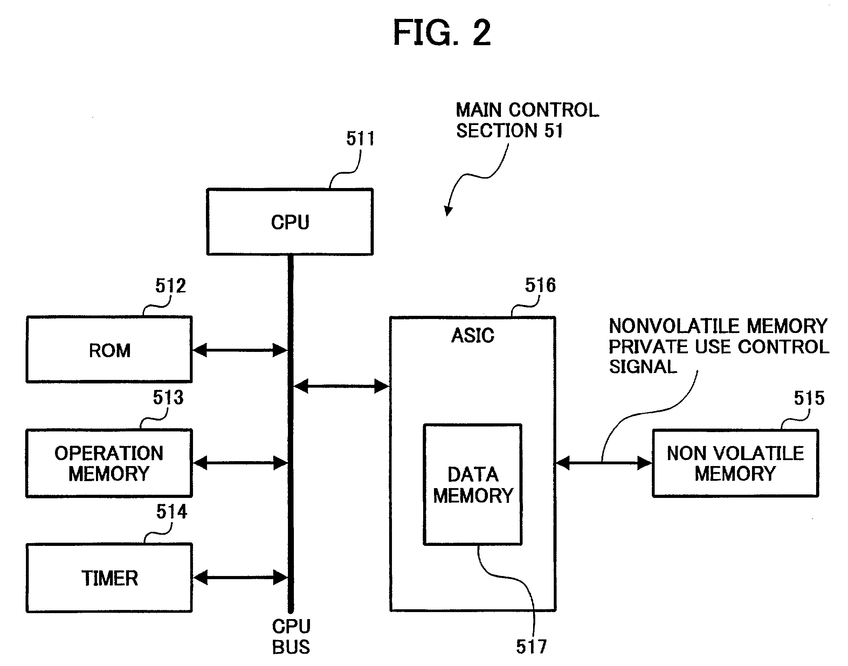

Fig. 2 illustrates the main hardware components of the main control section of Fig. 1. As noted from Fig. 2, the main control section 51 may include an ASIC (application-specific integrated circuit) 516 controlled by a CPU 511, a ROM 512, a working memory 513 and a timer 514 each connected to the CPU 511 via a CPU bus. The CPU 511 may operate in order to control the reading control section 111, the operation section 112, and the power supply 116 in accordance with a control program stored in the ROM 512. The CPU 511 may also operate in order to control the entire image forming apparatus. Data and information such as the control program used for operating the CPU 511 may be stored in the ROM 512. Information necessary for a control operation or information generated during image formation as history (career) data (e.g. information on the number of copies generated) or the like may also be stored in the non-volatile memory 515. Conventionally, a non-volatile memory storing usage information that may change in accordance with usage condition is directly connected to a CPU via a CPU bus in a manner similar to a ROM or a working memory. In addition, such a non-volatile memory is accessed so as to update the usage information under direct control of the CPU. Accordingly, conventionally the performance is lowered as described earlier. Then, a prescribed device may be provided so as to shorten a period of time when the CPU 511 drives to update usage information of the non-volatile memory as much as possible and to reduce the burden or computing load of the CPU 511. As a result, the performance of the entire system may be not lowered.

Specifically, the ASIC 516 may disable the CPU 511 to directly access the non-volatile memory 515 as illustrated in Fig. 2. The non-volatile memory 515 may be enabled to communicate a private usage control signal with an access control device (not shown) provided in the ASIC 516, and is controlled by the CPU 511 via the ASIC 516.

A control operation performed by the CPU 511 is now briefly described. After the electric power is supplied, the CPU 511 may perform a series of control operations in accordance with a control program stored in the ROM 512. The working memory 513 may then function as a working area for the CPU 511. By connecting the non-volatile memory 515 to the CPU 511 with a non-volatile memory private usage control signal generated by the ASIC 516, the non-volatile memory 515 can not be accessed in synchronism with a control signal of the CPU 511. In addition, the data memory 517 may receive the non-volatile memory private usage control signal. Accordingly, a copying operation (when the electric power is supplied) and periodical updating of the non-volatile memory 515 may be performed between the non-volatile memory 515 and the data memory 517. Thus, those operations may not be performed directly to the non-volatile memory 515 but may be mediated instead. In addition, the cycle of updating the non-volatile memory 515 may be adjusted by the timer 514 so that such an updating operation is repeated every time when a prescribed time period has elapsed. Further, such a timer 514 can be integrated in the ASIC 516.

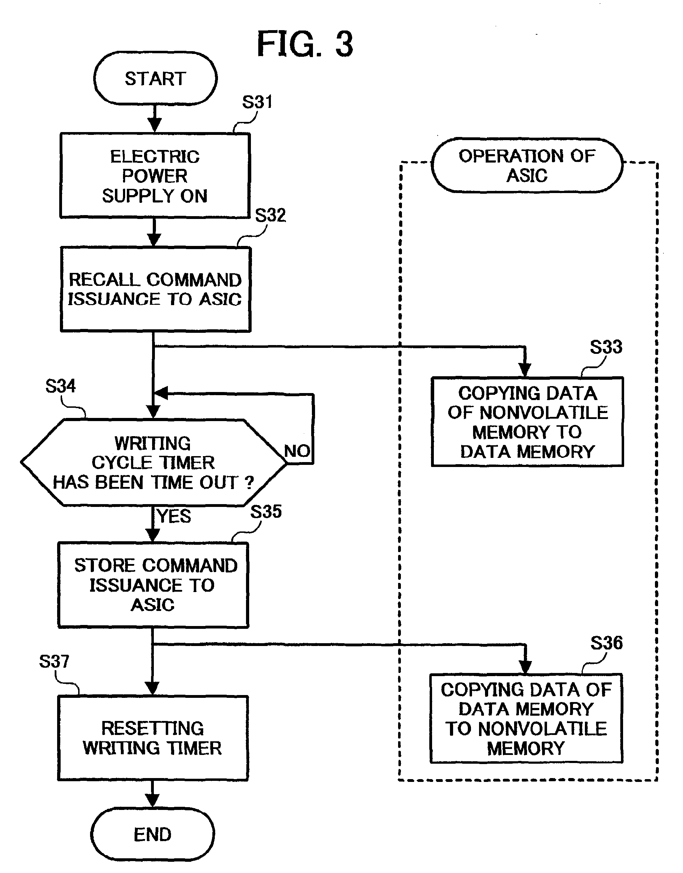

Fig. 3 illustrates an exemplary control flow of a data updating process performed with regard to the non-volatile memory 515 of Fig. 2. Initially, the electric power may be supplied (S31).Then, the CPU 511 may issue a recall command and enable the ASIC 516 to copy data of the non-volatile memory 515 to the data memory 517 of the ASIC 516 (S32). The ASIC 516 may receive and execute the recall command, i.e., copy the data of the non-volatile memory 515 to the data memory 517 (S33), and inform the CPU 511 of termination of the copying process. After that, ordinarily performed reference and update operations (not shown) with regard to a variety of usage information, which are performed based upon an operation of the digital copier 11 controlled by the CPU 511, may be directed to the data memory 517. Specifically, the ordinarily performed reference and update operations may not be directed to the non-volatile memory 515.

Further, every time when the timer 514 generates a timeout signal, the data of the data memory 517 may be copied to the non-volatile memory 515. To perform such a copying operation, a timeout time may optionally be set to the timer 514 so as to generate the timeout signal. If such a timeout time is set in view of the rewriting lifetime of the non-volatile memory 515, the lifetime of the non-volatile memory 515 can substantially meet with the lifetime of the product. In this example as illustrated in Fig. 3, the CPU 511 may initially issue a command instructing that data of the data memory 517 is copied to the non-volatile memory 515.

The CPU 511 may then check the timeout of the timer 514 (S34), and issue a store command to the ASIC 516, instructing that data of the data memory 517 should be copied to the non-volatile memory 515, if the timeout is confirmed (S35). The ASIC 516 may receive and execute the store command and copy the data of the data memory 517 to the non-volatile memory 515 (S36), and inform the CPU 511 of the termination thereof. The CPU 511 may receive the termination information, and reset the writing timer 514 in order to set the next timeout (S37). Then, the flow may be terminated.

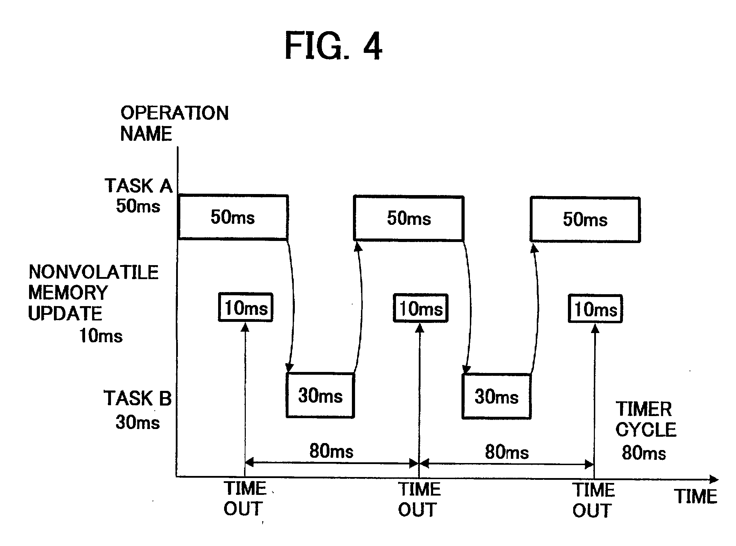

Thus, copying the non-volatile memory 515 when the electric power is supplied and periodical copying to the non-volatile memory 515 are performed asynchronously with a control signal of the CPU 511 exchanged between the non-volatile memory 515 and the ASIC 516. As a result, the performance of the CPU 511 may be not lowered. Fig. 4 illustrates such a usage condition of the CPU bus, wherein an update is independently performed from an operation of the CPU 511. Since an update of the non-volatile memory 515 for 10ms does not occupy the CPU bus, three times of the task A taking 50ms and twice of the task B taking 30ms may be terminated within 210ms. It may be realized that the same tasks can be terminated earlier by 30ms than the conventional example illustrated in Fig. 14.

Further, an SRAM can be employed as a data memory 517 integrated in the ASIC 516 to simplify the configuration of a control circuit, because it need not to be controlled. Specifically, refreshing and hardwiring to an external device may be not needed due to its installation in the ASIC 516.

A DRAM can also be employed as a data memory 517. Since the DRAM offers a higher storage capacity in substantially the same cell area as compared to the SRAM, the DRAM may readily handle a non-volatile memory having a high capacity. In addition, since hardwiring to the outside is needless due to its installation in the ASIC 516, configuration of a control circuit can be simplified.

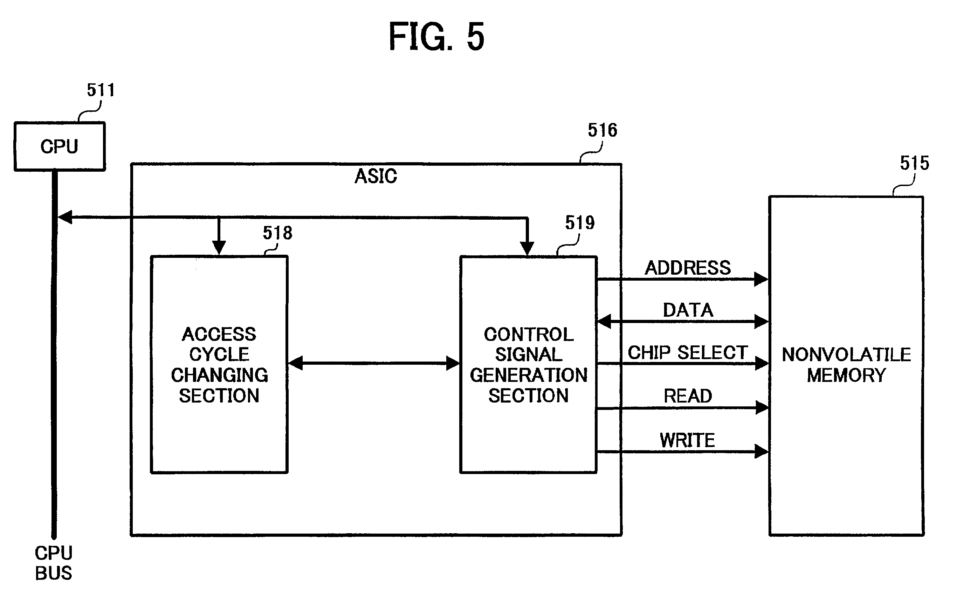

An exemplary access control device and access cycle changing device installed or integrated in the ASIC 516 are now described with reference to Fig. 2 as another embodiment. This embodiment aims to readily handle various types of non-volatile memories having different access speeds by changeably setting a cycle of the access to the non-volatile memory. Fig. 5 illustrates still another modification of the main control section illustrated in Fig. 2. As noted from Fig. 5, the ASIC 516 may include and connect a control signal generation section 519 serving as an access control device and accessing the non-volatile memory 515 and an access cycle changing section 518 to a CPU 511 via the CPU bus. The control signal generation section 519 may generate address, data, chip select, and read and write signals as private usage control signals transmitted to the non-volatile memory 515.

The control signal generation section 519 may control the data memory 517 to transmit and receive data to and from the non-volatile memory 515. In addition, the access cycle changing section 518 may be enabled to optionally change a cycle of an access to the non-volatile memory 515 based upon an instruction from the CPU 511.

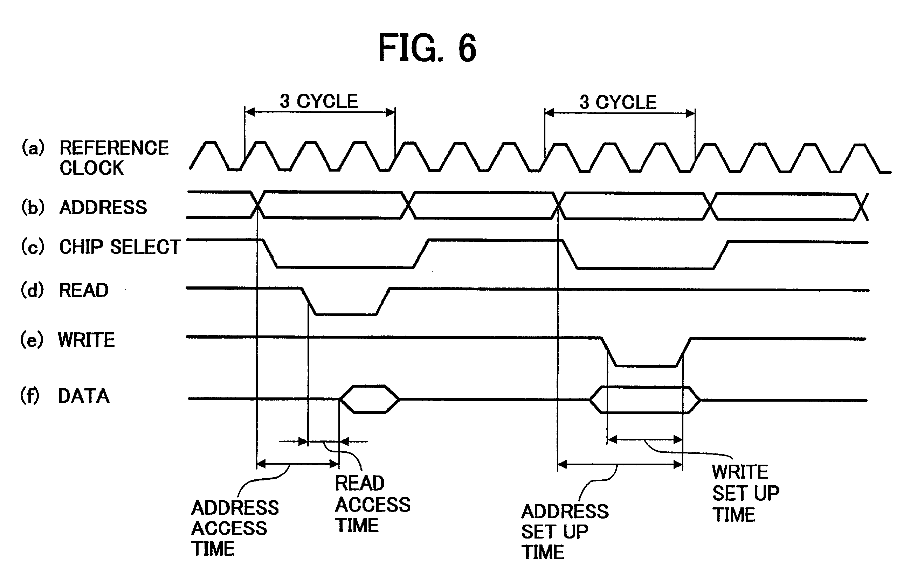

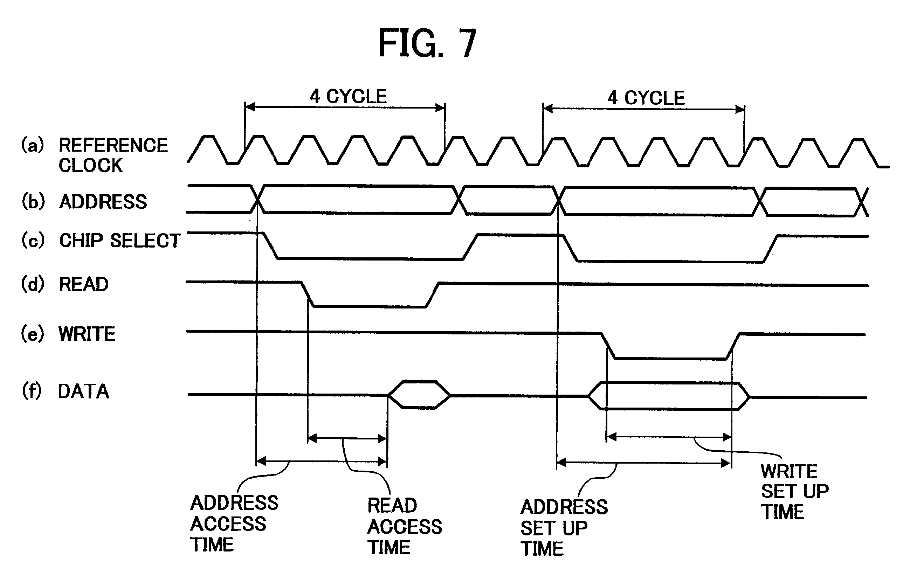

Figs. 6 and 7 are time charts for illustrating control signals and various data operations performed when the access cycle changing section 518 changes an access cycle. The control signal generation section 519 may generate a reference clock as illustrated in the respective drawings. Fig. 6 illustrates a case when an access is performed to the non-volatile memory 515 in three cycles of reference clocks, namely, the control signal generation section 519 generates respective control signals so that the access can be completed during a time period corresponding to three cycles. Fig. 6 illustrates a relation between the timing generation of a control signal and an accessing time period for accessing to a device when both reading and writing are performed. Fig. 7 illustrates a case when a cycle of the access is four cycles. As becomes apparent from a comparison of Fig. 6 with Fig. 7, a read access time, an address access time, a write set up time, and an address set up time required when reading and writing are performed in the four cycles may be longer than respective of those when performed in the three cycles. Thus, an access time may be adjusted in accordance with a number of access cycles. Accordingly, a memory having a slower access time can be handled.

Still another embodiment is now described with reference to several drawings. When high-speed access to a non-volatile memory is intended, a burst reading and writing are preferable.

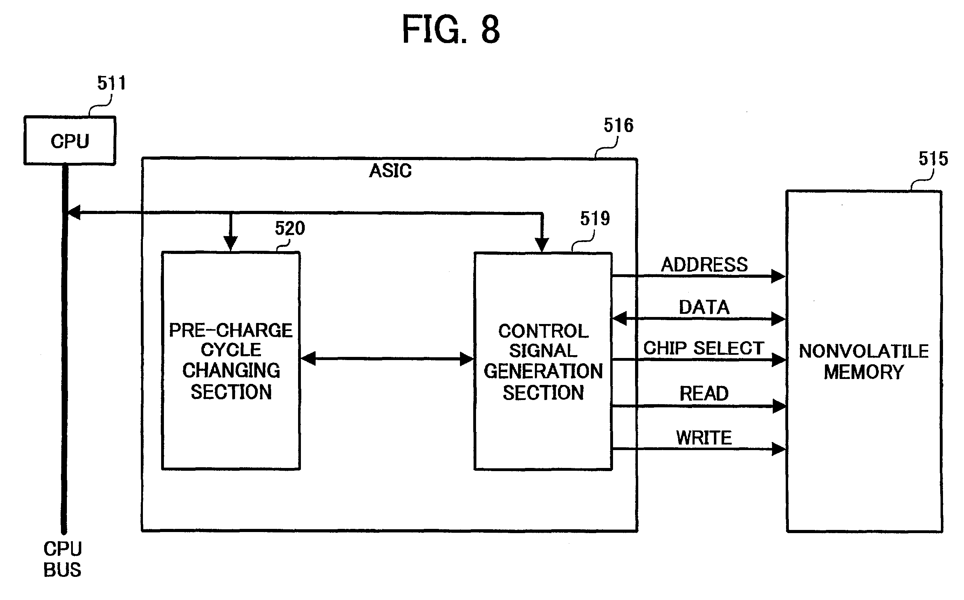

Such burst reading and writing may enable the ASIC 516 to successively read and write data from and to a plurality of addresses of the non-volatile memory. However, there exists a device that is not capable of performing such an access. In addition, there sometimes exists a situation when a design around is forcibly needed in view of specification and cost or the like when a system is designed. Then, this embodiment may propose to readily handle various types of non-volatile memories working in various ways by preferably selecting one of normal and burst reading and writing manners when accessing to a non-volatile memory in accordance with a changeably set cycle. Fig. 8 briefly illustrates a main control section of this embodiment. The ASIC 516 may include and connect a control signal generation section 519 serving as an access control device and accessing to the non-volatile memory 515 and a pre-charge cycle changing section 520 to a CPU 511 via a CPU bus. The control signal generation section 519 may generate address, data, chip select, and read and write signals as private usage control signals so as to control data transmission performed between the data memory 517 and the non-volatile memory 515. When the normal read operation is selected as an accessing manner for the non-volatile memory 515, and accordingly, a pre-charging operation is to be performed, a pre-charge cycle changing section 520 capable of optionally selecting insertion of a pre-charge cycle may select a pre-charge cycle. Such selection may be performed based upon an instruction from the CPU 511.

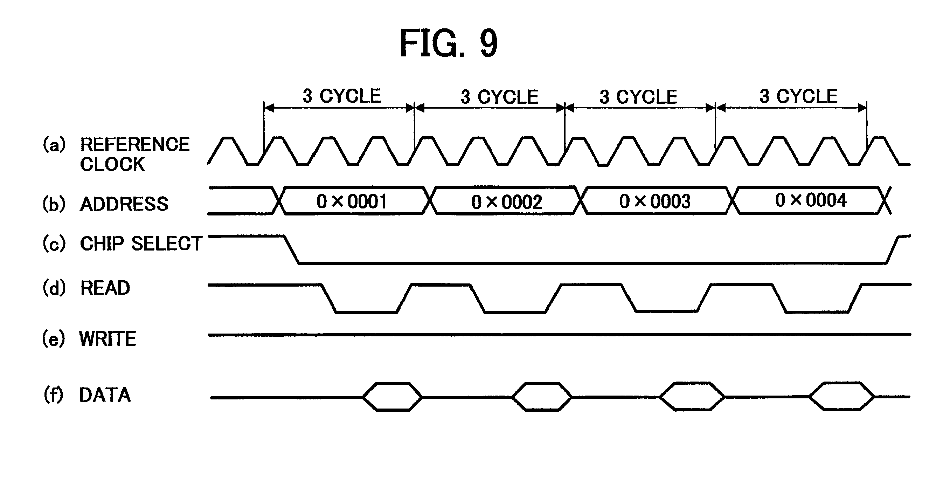

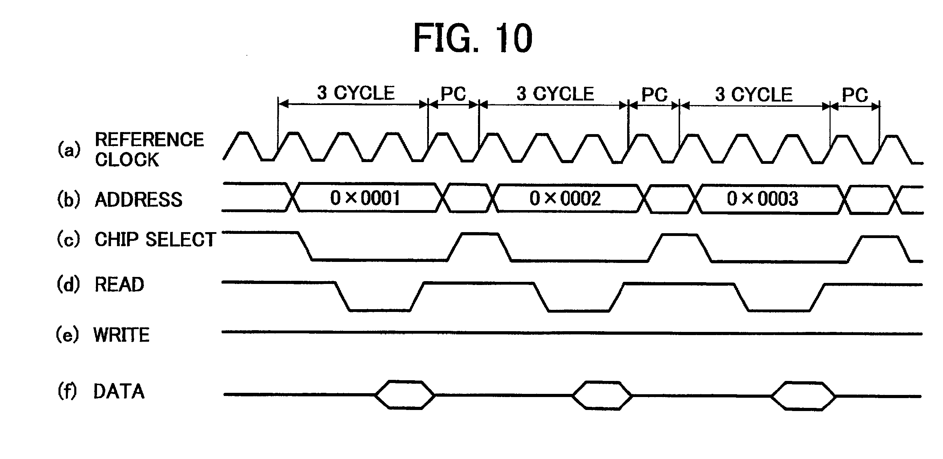

Figs. 9 and 10 illustrate time charts for illustrating operations performed when the pre-charge cycle is inserted or omitted, and the burst read or normal read is set through the pre-charge cycle changing section 520. A reference clock illustrated in these drawings may be generated by the control signal generating section 519 of Fig. 8. Fig. 9 illustrates an access cycle when a burst read is performed from a non-volatile memory. Since the pre-charge process is not inserted, data can be read from different addresses at a high speed only by changing an address while maintaining a chip select signal active. Fig. 10 illustrates another access cycle when a normal read is performed. As noted from Fig. 10, a pre-charge time period (PC) may be required and the normal read is performed in prescribed cycles in which one cycle of a pre-charge time period is added to three cycles of an access time period. As a result, data reading may be delayed by the pre-charge time period.

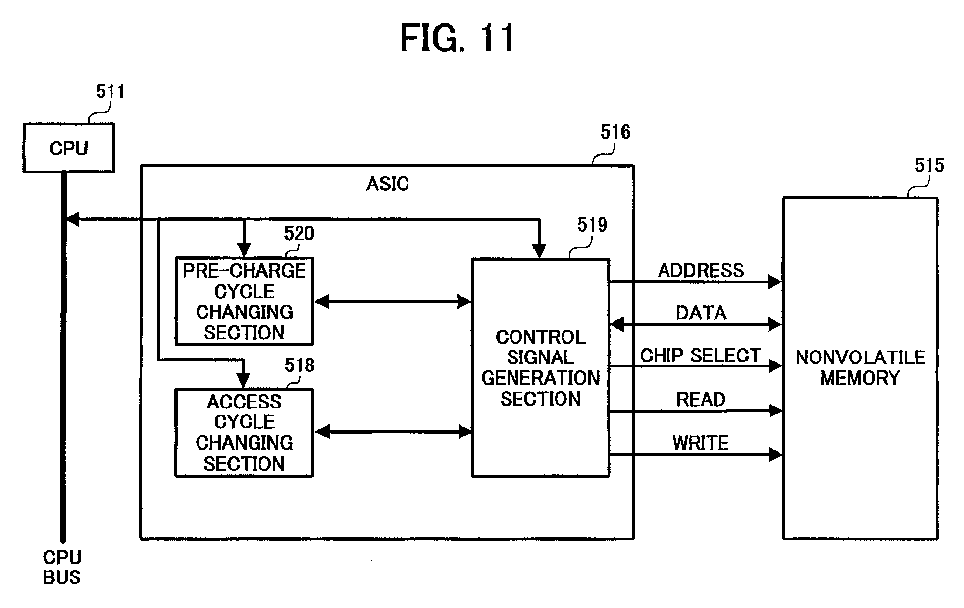

When the above-described access is achieved regardless of the type of a non-volatile memory, a device capable of selectively determining the access speed and manner should be needed. Fig. 11 briefly illustrates a main control section of this example. As noted from Fig. 11, the ASIC 516 may include and connect a control signal generation section 519 serving as an access control device and accessing to the non-volatile memory 515, an access cycle changing section 518, and a pre-charge cycle changing section 520 to a CPU 511 via a CPU bus. The control signal generation section 519 again generates address, data, chip select, and read and write signals as private usage signals transmitted to the non-volatile memory 515. Thus, the control signal generation section 519 may control data transmission performed between the data memory 517 and the non-volatile memory 515. All of the control signal generation section 519, the access cycle changing section 518, and the pre-charge cycle changing section 520 may operate in a manner similar to that described earlier. In addition, the above-described selecting device can be integrated into an integrated circuit and operated with its scale and number of parts being suppressed to the least levels, respectively.

Further, an EEPROM can be employed at least in a portion of the non-volatile memory. Because, the EEPROM is employable in various ways due to its large variations and cheapness. In addition, a ferroelectric substance memory can also be employed in a similar manner. Because, the ferroelectric substance memory may have a longer rewritable life and a larger capacity than the EEPROM. Owing to these characteristics, the likelihood of data updating errors whose possibility generally increases in proportion to the frequency of power supply stoppage and of accidents or failures may be decreased.

The mechanisms and processes set forth in the present invention may be implemented using one or more conventional general purpose microprocessors and/or signal processors programmed according to the teachings in the present specification as will be appreciated by those skilled in the relevant arts. Appropriate software coding can readily be prepared by skilled programmers based on the teachings of the present disclosure, as will also be apparent to those skilled in the relevant arts. However, as will be readily apparent to those skilled in the art, the present invention also may be implemented by the preparation of application-specific integrated circuits (ASICS) by interconnecting an appropriate network of conventional component circuits or by a combination thereof with one or more conventional general purpose microprocessors and/or signal processors programmed accordingly. The present invention thus also includes a computer-based product or computer program which may be hosted on a storage medium and include, but is not limited to, any type of disk including floppy disks, optical disks, CD-ROMs, magnet-optical disks, ROMs, RAMs, EPROMs, EEPROMs, flash memory, magnetic or optical cards, or any type of media suitable for storing electronic instructions or computer program code portions.

Numerous additional modifications and variations of the present invention are possible in light of the above teachings. It is therefore to be understood that within the scope of the appended claims, the present invention may be practiced otherwise as specifically described herein.

## Claims

1. An image forming apparatus, comprising:
an image forming section (115) configured to perform an image forming operation in accordance with image data;
a central processing unit (511) configured to entirely control the image forming apparatus at least via a CPU bus line;
a volatile memory (517) configured to temporarily store at least usage information, said usage information being referred to and replaced with newly generated usage information during an image forming operation; and
a non-volatile memory (515) configured to finally store usage information;
**characterized in that** an integrated circuit (516), comprising an access control device and said volatile memory, is provided between said CPU bus line and said non-volatile memory (515) for disabling said central processing unit (511) to directly access said non-volatile memory (515), said access control device being configured to receive an access performing signal from the central processing unit (511) and output at least address, data, and a variety of control signals when accessing and updating said non-volatile memory (515) with the new usage information of the volatile memory.

2. The image forming apparatus according to claim 1, wherein said output is performed via a private usage line other than the CPU bus line connecting the central processing unit (511) to the volatile memory (517).

3. The image forming apparatus according to claim 1 or 2, wherein said updating is performed in a prescribed interval without interfering a task performed under a control of the central processing unit.

4. The image forming apparatus according to claim 3, wherein said interval is controlled by a timer (514) connected to the central processing unit.

5. The image forming apparatus according to any of the preceding claims, wherein said finally stored usage information is copied to the volatile memory (517) as temporary usage information before the image formation is started.

6. The image forming apparatus according to any of the preceding claims, further comprising an access cycle changing device (518) configured to change a number of cycles in which accessing to the non-volatile memory (515) is performed in accordance with a type of the non-volatile memory.

7. The image forming apparatus according to any of the preceding claims, further comprising an accessing manner switching device configured to switch an accessing manner from a normal read or write mode to a burst read or write mode vice versa.

8. The image forming apparatus according to any one of claims 4, 6, and 7, wherein said access control device is integrated into an IC and wherein the access cycle changing device or the timer or the access manner switching device is integrated in the IC.

9. The image forming apparatus according to any of the preceding claims, wherein said volatile memory (517) includes an SRAM or a DRAM integrated in the IC.

10. The image forming apparatus according to any of claims 1 to 8, wherein said non-volatile memory (517) includes an EEPROM or a ferroelectric substance memory.

11. An image forming method for performing an image forming operation in accordance with image date using an image forming section (115), said image forming operation being entirely controlled by a central processing unit (511) at least via a CPU bus line, wherein
at least usage information temporarily stored in a volatile memory (517) is referred to and replaced with newly generated usage information during an image forming operation; and
said usage information is finally stored in a non-volatile memory (515);
wherein an integrated circuit (516), comprising an access control device and said volatile memory, provided between CPU bus line and said non-volatile memory (515) disables said central processing unit (511) to directly access said non-volatile memory (515), wherein said access control device receives an access performing signal from the central processing unit (511) and outputs at least address, data, and a variety of control signals when accessing and updating the non-volatile memory (515) with the new usage information of the volatile memory.

12. A computer program comprising program code means for performing the steps of claim 11, when said program is executed on a data processing means of an image forming apparatus.

13. The computer program comprising the program code means according to claim 12 that are recorded on a data carrier readable by a data processing means of an image forming apparatus.

## Patentansprüche

1. Bilderzeugungsvorrichtung, die umfasst:
einen Bilderzeugungsabschnitt (115), der so konfiguriert ist, dass er eine Bilderzeugungsoperation in Übereinstimmung mit Bilddaten ausführt;
eine Zentraleinheit (511), die so konfiguriert ist, dass sie die Bilderzeugungsvorrichtung wenigstens über eine CPU-Busleitung vollständig steuert;
einen flüchtigen Speicher (517), der so konfiguriert ist, dass er wenigstens Nutzungsinformationen vorübergehend speichert, wobei während einer Bilderzeugungsoperation auf die Nutzungsinformationen zugegriffen wird und diese Nutzungsinformationen durch neu erzeugte Nutzungsinformationen ersetzt werden; und
einen nichtflüchtigen Speicher (515), der so konfiguriert ist, dass er Nutzungsinformationen endgültig speichert;
**dadurch gekennzeichnet, dass** zwischen der CPU-Busleitung und dem nichtflüchtigen Speicher (515) eine integrierte Schaltung (516) vorgesehen ist, die eine Zugriffssteuervorrichtung und den flüchtigen Speicher umfasst, um die Zentraleinheit (511) an einem direkten Zugriff auf den nichtflüchtigen Speicher (515) zu hindern, wobei die Zugriffssteuervorrichtung so konfiguriert ist, dass sie ein Zugriffsausführungssignal von der Zentraleinheit (511) empfängt und wenigstens eine Adresse, Daten sowie mehrere verschiedene Steuersignale ausgibt, wenn sie auf den nichtflüchtigen Speicher (515) mit den neuen Nutzungsinformationen des flüchtigen Speichers zugreift und ihn aktualisiert.

2. Bilderzeugungsvorrichtung nach Anspruch 1, bei der die Ausgabe über eine Privatnutzungsleitung, die von der CPU-Busleitung, die die Zentraleinheit (511) mit dem flüchtigen Speicher (517) verbindet, verschieden ist, ausgeführt wird.

3. Bilderzeugungsvorrichtung nach Anspruch 1 oder 2, bei der die Aktualisierung in einem vorgeschriebenen Zeitintervall ausgeführt wird, ohne eine unter einer Steuerung der Zentraleinheit ausgeführte Aufgabe zu stören.

4. Bilderzeugungsvorrichtung nach Anspruch 3, bei der das Zeitintervall durch einen mit der Zentraleinheit verbundenen Zeitgeber (514) gesteuert wird.

5. Bilderzeugungsvorrichtung nach einem der vorhergehenden Ansprüche, bei der die endgültig gespeicherten Nutzungsinformationen in den flüchtigen Speicher (517) als temporäre Nutzungsinformationen kopiert werden, bevor die Bilderzeugung begonnen wird.

6. Bilderzeugungsvorrichtung nach einem der vorhergehenden Ansprüche, die ferner eine Zugriffszyklus-Änderungsvorrichtung (518) umfasst, die so konfiguriert ist, dass sie eine Anzahl Zyklen, in der ein Zugriff auf den nichtflüchtigen Speicher (515) ausgeführt wird, in Übereinstimmung mit dem Typ des nichtflüchtigen Speichers ändert.

7. Bilderzeugungsvorrichtung nach einem der vorhergehenden Ansprüche, die ferner eine Zugriffsart-Umschaltvorrichtung umfasst, die so konfiguriert ist, dass sie eine Zugriffsart von einem normalen Lese- oder Schreibbetrieb in einen Burst-Lese- oder Burst-Schreibbetrieb oder umgekehrt umschaltet.

8. Bilderzeugungsvorrichtung nach einem der Ansprüche 4, 6 und 7, bei der die Zugriffssteuervorrichtung in eine IC integriert ist und bei der die Zugriffszyklus-Änderungsvorrichtung oder der Zeitgeber oder die Zugriffsart-Umschaltvorrichtung in die IC integriert ist.

9. Bilderzeugungsvorrichtung nach einem der vorhergehenden Ansprüche, bei der der flüchtige Speicher (517) einen SRAM oder einen DRAM, der in die IC integriert ist, enthält.

10. Bilderzeugungsvorrichtung nach einem der Ansprüche 1 bis 8, bei der der nichtflüchtige Speicher (517) einen EEPROM oder einen Speicher aus ferroelektrischer Substanz enthält.

11. Bilderzeugungsverfahren zum Ausführen einer Bilderzeugungsoperation in Übereinstimmung mit Bilddaten unter Verwendung eines Bilderzeugungsabschnitts (115), wobei die Bilderzeugungsoperation durch eine Zentraleinheit (511) wenigstens über eine CPU-Busleitung vollständig gesteuert wird, wobei
wenigstens auf Nutzungsinformationen, die in einem flüchtigen Speicher (517) temporär gespeichert sind, zugegriffen wird und diese Nutzungsinformationen während einer Bilderzeugungsoperation durch neu erzeugte Nutzungsinformationen ersetzt werden; und
die Nutzungsinformationen in einem nichtflüchtigen Speicher (515) endgültig gespeichert werden;
wobei eine integrierte Schaltung (516), die eine Zugriffssteuervorrichtung und den flüchtigen Speicher umfasst und zwischen der CPU-Busleitung und dem nichtflüchtigen Speicher (515) vorgesehen ist, die Zentraleinheit (511) daran hindert, direkt auf den nichtflüchtigen Speicher (515) zuzugreifen, wobei die Zugriffssteuervorrichtung ein Zugriffsausführungssignal von der Zentraleinheit (511) empfängt und wenigstens eine Adresse, Daten sowie mehrere verschiedene Steuersignale ausgibt, wenn auf den nichtflüchtigen Speicher (515) mit den neuen Nutzungsinformationen des flüchtigen Speichers zugegriffen wird und dieser damit aktualisiert wird.

12. Computerprogramm, das Programmcodemittel enthält, um die Schritte nach Anspruch 11 auszuführen, wenn das Programm in einem Datenverarbeitungsmittel einer Bilderzeugungsvorrichtung ausgeführt wird.

13. Computerprogramm, das Programmcodemittel enthält, nach Anspruch 12, das auf einem Datenträger aufgezeichnet ist, der von einem Datenverarbeitungsmittel der Bilderzeugungsvorrichtung gelesen werden kann.

## Revendications

1. Appareil de formation d'image, comprenant :
une section de formation d'image (115) qui est configurée pour réaliser une opération de formation d'image conformément à des données d'image ;
une unité centrale de traitement (511) qui est configurée pour commander en totalité l'appareil de formation d'image au moins via une ligne de bus de CPU ;
une mémoire volatile (517) qui est configurée pour stocker de façon temporaire au moins une information d'utilisation, il est fait référence à ladite information d'utilisation et elle est remplacée par une information d'utilisation nouvellement générée pendant une opération de formation d'image ; et
une mémoire non volatile (515) qui est configurée pour stocker pour finir une information d'utilisation,
**caractérisé en ce qu'**un circuit intégré (516) qui comprend un dispositif de commande d'accès et ladite mémoire volatile est prévu entre ladite ligne de bus de CPU et ladite mémoire non volatile (515) pour invalider un accès direct à ladite mémoire non volatile (515) par ladite unité centrale de traitement (511), ledit dispositif de commande d'accès étant configuré pour recevoir un signal de réalisation d'accès en provenance de l'unité centrale de traitement (511) et pour émettre en sortie au moins une adresse, des données et une certaine variété de signaux de commande lors d'un accès à ladite mémoire non volatile (515) et d'une mise à jour de celle-ci à l'aide de la nouvelle information d'utilisation de la mémoire volatile.

2. Appareil de formation d'image selon la revendication 1, dans lequel ladite sortie est réalisée via une ligne d'utilisation privée autre que la ligne de bus de CPU qui connecte l'unité centrale de traitement (511) à la mémoire volatile (517).

3. Appareil de formation d'image selon la revendication 1 ou 2, dans lequel ladite mise à jour est réalisée selon un intervalle prescrit sans interférer avec une tâche qui est réalisée sous une commande de l'unité centrale de traitement.

4. Appareil de formation d'image selon la revendication 3, dans lequel ledit intervalle est commandé par une minuterie (514) qui est connectée à l'unité centrale de traitement.

5. Appareil de formation d'image selon l'une quelconque des revendications précédentes, dans lequel ladite information d'utilisation stockée pour finir est copiée dans la mémoire volatile (517) en tant qu'information d'utilisation temporaire avant que la formation d'image ne soit démarrée.

6. Appareil de formation d'image selon l'une quelconque des revendications précédentes, comprenant en outre un dispositif de modification de cycle d'accès (518) qui est configuré pour modifier un nombre de cycles selon lesquels un accès à la mémoire non volatile (515) est réalisé conformément à un type de la mémoire non volatile.

7. Appareil de formation d'image selon l'une quelconque des revendications précédentes, comprenant en outre un dispositif de commutation de mode d'accès qui est configuré pour commuter un mode d'accès depuis un mode lecture normale ou un mode écriture normale dans un mode lecture par salve ou dans un mode écriture par salve et vice versa.

8. Appareil de formation d'image selon l'une quelconque des revendications 4, 6 et 7, dans lequel ledit dispositif de commande d'accès est intégré selon un IC et dans lequel le dispositif de modification de cycle d'accès ou la minuterie ou le dispositif de commutation de mode d'accès est intégré dans l'IC.

9. Appareil de formation d'image selon l'une quelconque des revendications précédentes, dans lequel ladite mémoire volatile (517) inclut une SRAM ou une DRAM qui est intégrée dans l'IC.

10. Appareil de formation d'image selon l'une quelconque des revendications 1 à 8, dans laquelle ladite mémoire volatile (517) inclut une EEPROM ou une mémoire à substance ferroélectrique.

11. Procédé de formation d'image pour réaliser une opération de formation d'image conformément à des données d'image en utilisant une section de formation d'image (115), ladite opération de formation d'image étant en totalité commandée par une unité centrale de traitement (511) au moins via une ligne de bus de CPU,
dans lequel :
il est fait référence à au moins une information d'utilisation qui est stockée de façon temporaire dans une mémoire volatile (517) et elle est remplacée par une information d'utilisation nouvellement générée pendant une opération de formation d'image ; et
ladite information d'utilisation est pour finir stockée dans une mémoire non volatile (515),
dans lequel un circuit intégré (516) qui comprend un dispositif de commande d'accès et ladite mémoire volatile et qui est prévu entre une ligne de bus de CPU et ladite mémoire non volatile (515) invalide un accès direct à ladite mémoire non volatile (515) par ladite unité centrale de traitement (511), dans lequel ledit dispositif de commande d'accès reçoit un signal de réalisation d'accès en provenance de l'unité centrale de traitement (511) et émet en sortie au moins une adresse, des données et une certaine variété de signaux de commande lors d'un accès à la mémoire non volatile (515) et d'une mise à jour de celle-ci à l'aide de la nouvelle information d'utilisation de la mémoire volatile.

12. Programme d'ordinateur comprenant un moyen de code de programme pour réaliser les étapes de la revendication 11 lorsque ledit programme est exécuté sur un moyen de traitement de données d'un appareil de formation d'image.

13. Programme d'ordinateur comprenant le moyen de code de programme selon la revendication 12 qui est enregistré sur un support de données lisible par un moyen de traitement de données d'un appareil de formation d'image.
